(19) Europäisches Patentamt
European Patent Office
Office européen des brevets

(11) **EP 2 248 938 B1**

(12) **EUROPEAN PATENT SPECIFICATION**

(45) Date of publication and mention
of the grant of the patent:
**23.08.2017 Bulletin 2017/34**

(51) Int Cl.:
***D06F 37/42*** *(2006.01)*     ***D06F 37/28*** *(2006.01)*
***D06F 39/14*** *(2006.01)*

(21) Application number: **10160586.3**

(22) Date of filing: **21.04.2010**

(54) **DOOR LOCK DEVICE OF DRUM WASHING MACHINE AND WASHING MACHINE HAVING THE SAME**

TÜRVERSCHLUSSVORRICHTUNG EINER TROMMELWASCHMASCHINE UND WASCHMASCHINE DAMIT

DISPOSITIF DE VERROUILLAGE DE PORTE DE LAVE-LINGE À TAMBOUR ET LAVE-LINGE DOTÉ DE CELUI-CI

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.05.2009 KR 20090040317**

(43) Date of publication of application:
**10.11.2010 Bulletin 2010/45**

(73) Proprietor: **Samsung Electronics Co., Ltd.**
**Suwon-si, Gyeonggi-do, 443-742 (KR)**

(72) Inventor: **Choi, Han Kyu**
**Gyeonggi-do (KR)**

(74) Representative: **Grünecker Patent- und Rechtsanwälte**
**PartG mbB**
**Leopoldstraße 4**
**80802 München (DE)**

(56) References cited:
**EP-A1- 1 741 378**     **GB-A- 2 107 383**
**KR-A- 20090 002 342**     **US-A1- 2004 083 769**

**Description**

BACKGROUND

1. Field

Embodiments of the present invention relate to a drum washing machine, a door of which is opened by force of a predetermined magnitude or greater.

2. Description of the Related Art

Generally, a drum washing machine washes laundry received in a rotating tub as the laundry repeatedly rises and falls due to rotation of the rotating tub. Such a drum washing machine includes a body having a door to be opened or closed, a washtub fixedly installed in the body, a rotating tub rotatably installed in the washtub, and water supply/drain devices.

The body is formed in a front surface thereof with a laundry input opening, to allow a user to put laundry into the rotating tub. The door is pivotally coupled to the front surface of the body, to open or close the laundry input opening.

A door lock device is coupled to both an inner surface of the door and the body and locks the door to the body. The door lock device includes a door lever coupled to the door and configured to be caught by a door switch of the body. When the door is pivoted to the laundry input opening, the door lever is caught by the door switch, allowing the door to come into close contact with the front surface of the body while closing the laundry input opening.

Over time, the size of the drum washing machines has increased, to wash a greater amount of laundry at once. That is, the rotating tub, in which laundry is received, has been manufactured to a greater size.

However, the rotating tub of the greater size may often cause an accident when the door is unexpectedly closed after a child enters the rotating tub. For this reason, it may be necessary to provide a washing machine designed to allow a child to escape by himself by opening a door from the inside.

EP-A1-1741378 discloses household appliances with a body and a door that can be opened and closed. A slider is movable from a corresponding rest position to a retaining position. A door lock device is coupled to a door switch. A corresponding hook member has a bent portion in its center and there are some guide slots which allow a partial opening or at least a displacement of the door during which a support structure causes the hook member to oscillate about pins. This oscillation is caused by the contact of an end of a hook member with a wall.

KR-A-20090002342 discloses a washing machine with a body and a door to open and close an opening in the body. The door lock device includes a door lever, which is pivotally installed on the door and can selectively be inserted or separated from an opening. The corresponding door lever is a linear one without any bent portion. The door handle is in contact with the door lever, wherein the door handle slides along a lower part of the door lever and during this sliding, the door lever is rotated from an engagement position to a release position.

It is an object of the present invention to provide a washing machine to prevent an accident from occurring therein.

This object is solved by the features of claim 1.

Advantageous embodiments are disclosed by the subclaims.

The door lever may include a hook portion to be caught by or released from a raised portion, a rotating portion rotatably coupled to the door and having a rotation center, the bent portion, and a connecting portion to connect the hook portion and rotating portion to each other.

The connecting portion may include a first connecting portion linearly extending from the hook portion to the bent portion, and a second connecting portion extending obliquely from the bent portion to the rotating portion.

The door lever may include a handle contact portion protruding from the rotating portion to come into contact with the door handle.

The body may include the raised portion, by or from which the hook portion is caught or released, the hook portion may include a holding protrusion protruding from an end thereof to be caught by the raised portion, and an angle defined between a contact point between the holding protrusion and the raised portion, the rotation center of the rotating portion, and a contact point between the handle contact portion and the door handle may be in a range of about 35° to about 75°.

The door lever may contain at least one of die-cast zinc material and die-cast aluminum material. The door lever may be made of a mixture of PolyOxyMethylene (POM) resin and glass fiber. A concentration of the glass fiber in the mixture may be in a range of about 10% to about 30%.

BRIEF DESCRIPTION OF THE DRAWINGS

These and/or other aspects of the invention will become apparent and more readily appreciated from the following description of the embodiments, taken in conjunction with the accompanying drawings of which:

FIG. 1 is a perspective view of a drum washing machine according to an embodiment of the present invention;
FIG. 2 is a sectional view taken along line II-II in a closed state of a door in FIG. 1;
FIG. 3 is an enlarged sectional view of the portion "A" of FIG. 2;
FIG. 4 is a front view of a door lever;
FIG. 5 is a detailed view illustrating action of force in FIG. 2; and
FIG. 6 is a detailed view illustrating action of force in FIG. 3.

## DETAILED DESCRIPTION OF EMBODIMENTS

Reference will now be made in detail to the embodiments, examples of which are illustrated in the accompanying drawings, wherein like reference numerals refer to the like elements throughout. The embodiments are described below to explain the present invention by referring to the figures.

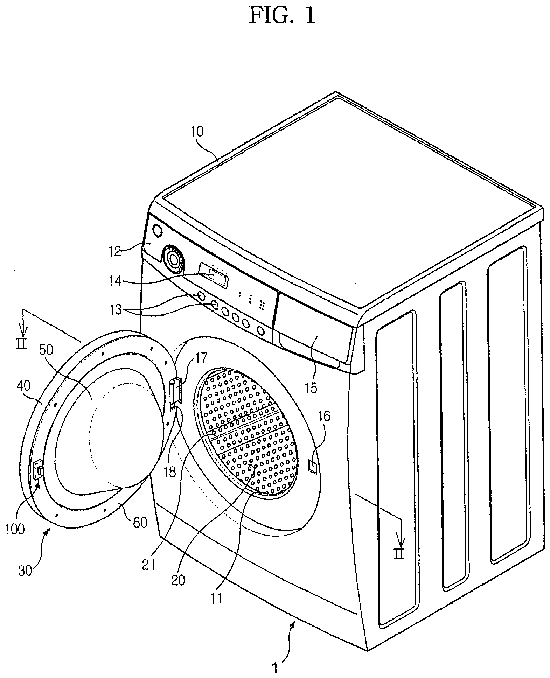

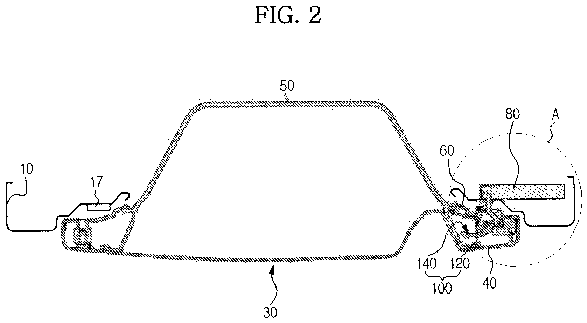

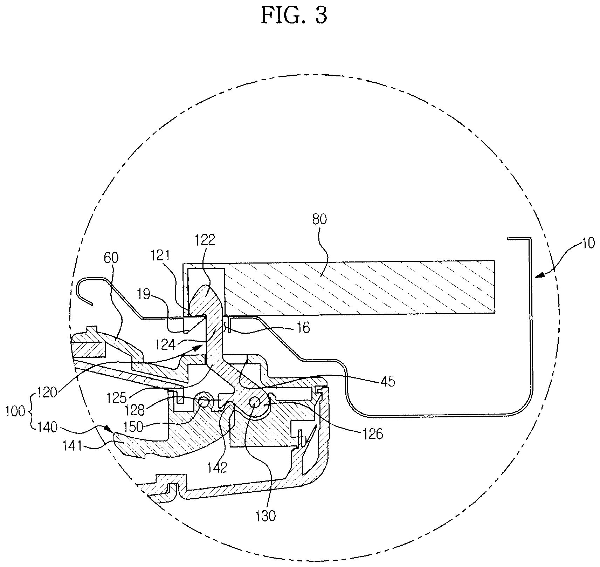

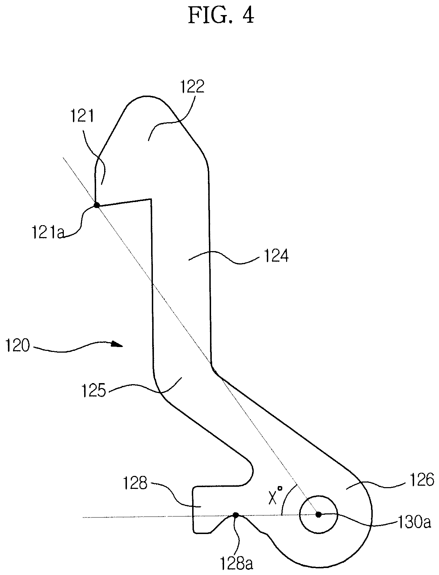

FIG. 1 is a perspective view of a drum washing machine according to an embodiment of the present invention, FIG. 2 is a sectional view taken along the line II-II in a closed state of a door in FIG. 1, FIG. 3 is an enlarged sectional view of the portion "A" of FIG. 2, and FIG. 4 is a front view of a door lever.

Referring to FIGS. 1 to 3, the drum washing machine 1 includes a body 10 having a laundry input opening 11, a rotating tub 20 rotatably installed in the body 10, and a door 30 coupled to a front surface of the body 10 and used to open or close the laundry input opening 11.

A control panel 12 for user manipulation is installed on an upper portion of the front surface of the body 10. The control panel 12 includes a variety of operating buttons 13 and a display 14. A detergent supply device 15 is provided at one side of the control panel 12 and is used to supply detergent into the rotating tub 20.

The rotating tub 20 is perforated with a plurality of holes. Lifters 21 are arranged on an inner peripheral surface of the rotating tub 20 and are used to raise laundry.

An insertion recess 16, into which a door lock device 100 that will be described hereinafter is inserted, is formed at one side of the laundry input opening 11 of the body 10. A door switch 80 is mounted inside the insertion recess 16. The door switch 80 is electrically connected to a controller (not shown) of the drum washing machine 1 and serves to constrain the coupling of the door lock device 100. That is, the door switch 80 is coupled to the door lock device 100 or releases the coupling of the door lock device 100 based on electric signals of the controller.

The door 30 includes a door cover 40 hinged to the front surface of the body 10, a door glass 50 coupled to the door cover 40, and a door glass holder 60 to couple the door glass 50 to the door cover 40. The door lever 120 passes through a hole 45 in the door glass holder 60.

The door cover 40 and door glass holder 60 have a centrally-opened annular shape to couple the transparent door glass 50. The door cover 40 and door glass holder 60 are coupled to each other by a plurality of fastening screws and in turn, a rim of the door glass 50 is press-fitted between the door cover 40 and the door glass holder 60. Thereby, the door cover 40, door glass 50, and door glass holder 60 are integrally coupled with one another.

The door cover 40 is coupled to a hinge shaft 18 of a hinge device 17 that is installed at a lateral position of the front surface of the body 10 and thus, is pivotable about the hinge shaft 18.

The door lock device 100 is located at one side of the door glass holder 60. The door lock device 100 includes a door lever 120, and a door handle 140 for the user to grip. The door lever 120 is pivotable inside the door cover 40 and is configured to be inserted into or separated from the door switch 80.

The door lever 120 is coupled to the door 30 via a door lever shaft 130 inside the door cover 40 and is pivotally rotated within a predetermined range about the door lever shaft 130. As shown in FIG. 4, the door lever 120 includes a hook portion 122 configured to be caught by or released from a raised portion 19 of the body 10, a rotating portion 126 having a center hole through which the door lever shaft 130 penetrates to enable pivotal rotation of the door lever 120 inside the door cover 40, a connecting portion 124 extending between the hook portion 122 and the rotating portion 126, and a handle contact portion 128 protruding from the rotating portion 126 to come into contact with the door handle 140.

The hook portion 122 has a holding protrusion 121 configured to be caught by the raised portion 19 formed at one side of the insertion recess 16 of the body 10. The holding protrusion 121 protrudes from an end of the hook portion 122.

The connecting portion 124 includes a center bent portion 125. The center bent portion 125 divides the connecting portion 124 into two portions having a predetermined angle therebetween. That is, the connecting portion 124 extends linearly from the hook portion 122 to the bent portion 125, but extends obliquely from the bent portion 125 to the rotating portion 126.

The door lever shaft 130 is fastened through the center hole of the rotating portion 126, and the rotating portion 126 is rotated about the door lever shaft 130. A spring (not shown) is installed at one side of the rotating portion 126 and is used to keep the door lever 120 in contact with the door handle 140 while elastically supporting the door lever 120.

The handle contact portion 128 protruding from the rotating portion 126 is adapted to come into contact with the door handle 140 and serves to transmit the user's push force applied to the door handle 140 toward the door lever 120.

In the above-described configuration of the door lever 120, as shown in FIG. 4, a predetermined angle X° is defined between a tip end 121a of the holding protrusion 121, a center point 130a of the door lever shaft 130, and a contact point 128a between the handle contact portion 128 and door handle 140. As will be described hereinafter, due to the angle X°, the door 30 may be opened by force of a predetermined magnitude or more applied from inside the door 30.

Describing the above-described configuration in another manner, the holding protrusion 121 and the center point 130a of the door lever shaft 130 are spaced apart from each other at opposite sides on the basis of the connecting portion 124.

Also, the holding protrusion 121 and the center point 130a of the door lever shaft 130 are spaced apart from each other with a horizontal distance therebetween.

In the embodiment of the present invention, the door lever 120 is made of die-cast zinc material. The die-cast zinc material provides appropriate frictional force to allow the door 30 to be opened by force of a predetermined magnitude or greater applied from inside the door 30.

In an alternative embodiment, the door lever 120 may be made of die-cast aluminum material. The die-cast aluminum material also provides appropriate frictional force to allow the door 30 to be opened by force of a predetermined magnitude or more applied from inside the door 30.

In another alternative embodiment, the door lever 120 may be made of a mixture of PolyOxyMethylene (POM) resin and glass fiber. In this case, an appropriate concentration of the glass fiber is in a range of 10% to 30%.

In addition to the die-cast zinc and aluminum materials and the mixture of POM resin and glass fiber, any other materials that may provide appropriate frictional force are also usable as a material of the door lever 120. In this case, the angle X° is appropriately changed based on friction coefficients of the respective materials, to allow the door to be opened by force applied from inside the door.

The door handle 140 is installed to be pushed by a user inserting his/her hand from the front side of the door 30. The door handle 140 is coupled to the door 30 via a door handle shaft 150. The door handle 140 includes a grip portion 141 to be pushed by the user, and a press portion 142 to press the handle contact portion 128 of the door lever 120.

Hereinafter, the opening principle of the door 30 by force applied to the door 30 according to the embodiment of the present invention will be described.

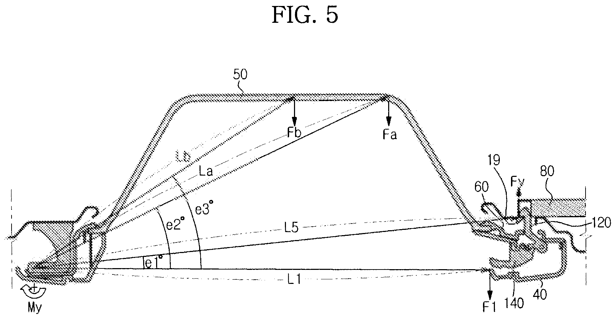

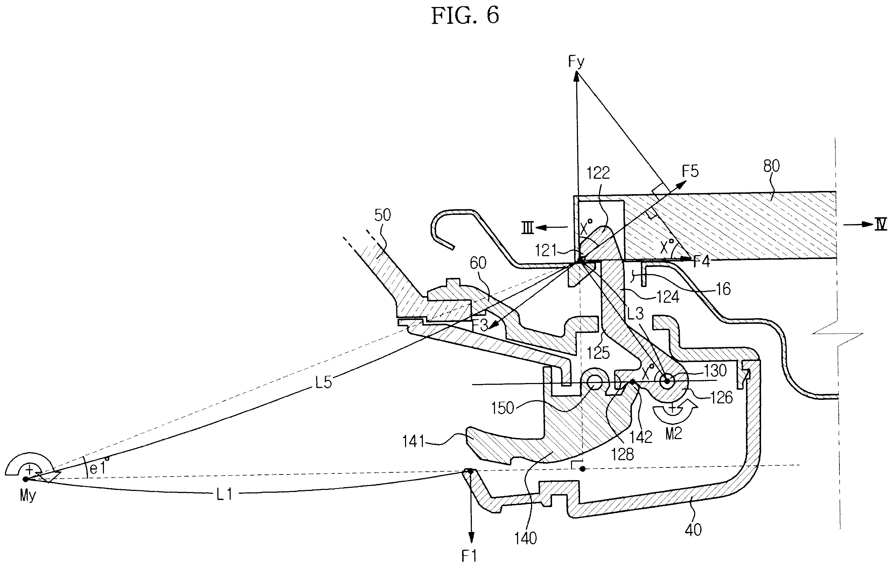

FIG. 5 is a detailed view illustrating action of force in FIG. 2, and FIG. 6 is a detailed view illustrating action of force in FIG. 3.

Referring first to FIG. 5, force applied outward by a person who is locked inside the door 30 may be represented by Fa or Fb. This force may also be represented by a pulling force F1 that is a force to pull a distal (at a distance L1) end of the door cover 40 from the outside. Fa, Fb and F1 fulfill the following relation:

$$My = Fa*La*\cos(e2°) = Fb*Lb*\cos(e3°) = F1*L1 \quad \text{---------} \quad (1)$$

where, My is rotation moment of the hinge shaft 18 of the door 30 La and Lb are moment arms, and e2 and e3 are angles, as shown in FIG. 5.

Then, the pulling force F1 may also be represented by force Fy that is a force to be applied to the end of the holding protrusion 21 based on the law of action and reaction. F1 and Fy fulfill the following relation:

$$F1*L1 = Fy*L5*\cos(e1°) \quad \text{----------------------------------------} \quad (2),$$

wherein L5 is the length of the moment arm.

Referring next to FIG. 6, elastic force, which is applied to the door lever 120 by the spring (not shown) installed at one side of the door lever 120, may be represented by rotation moment M2, and the following relation is obtained:

$$M2 = F3*L3, \text{ i.e. } F3 = (M2/L3) \quad \text{--------------------------------} \quad (3),$$

wherein F3 is a force and L3 is the corresponding moment arm.

FIG. 6 illustrates a state wherein the door switch 80 is moved in a direction III and is closed. In the closed state thereof, the door switch 80 acts to continuously apply force F4 to the door lever 120 in a direction IV. If a sum of component forces Fy and F4 acting in an opposite direction of force F3 is F5, the following relation is obtained:

$$F5 = Fy*cos(X°) + F4*sin(X°) \ \text{------------------------------} \ (4)$$

Finally, the door 30 is opened when the force F5 applied to the door lever 120 is greater than the force F3. That is, the following relation is obtained:

$$F5 > F3 \ \text{----------------------------------------------} \ (5)$$

By substituting F5 for the relation (4) and F3 for the relation (3) and summarizing them, we get

$$Fy*cos(X°) + F4*sin(X°) > (M2/L3).$$

$$\text{That is, } Fy > \{(M2/L3) - F4*sin(X°)\}/cos(X°) \ \text{-----------------} \ (6)$$

If Fy is greater than {(M2/L3) - F4*sin(X°)}/cos(X°), this means that the door 30 may be opened by the force Fa or Fb applied from inside the door 30.

By substituting exemplary design dimensions used in the embodiment (M2=6.6kgf.cm, L3=3.18cm, F4=0.4kgf, and X°=55°) for the relation (6), we get

$$Fy > \{(6.6/3.18)-0.4*sin(55°)\}/cos(55°) = 3.06kgf.$$

By substituting exemplary design dimensions of the embodiment (L5=42.1cm, e1°=5.7°, and L1=39.0cm) for the relation (2) in order to calculate the force applied from inside the door 30, we get

$$F1 > \{Fy*L5*cos(e1°)\}/(L1)=\{3.06*42.1*cos(5.7°)\}/(39.0)=3.3kgf.$$

By substituting exemplary design dimensions of the embodiment (La=33.6cm, Lb=26.5cm, e2°=26.5°, and e3°=34.5°) for the relation (1), we get

$$Fa > (F1*L1)/\{La*cos(e2°)\}=(3.3*39.0)/\{33.6*cos(26.5°)\}=4.3kgf, \text{ and } Fb >$$

$$(F1*L1)/\{Lb*cos(e3°)\}=(3.3*39.0)/\{26.5*cos(34.5°)\}=5.9kgf.$$

In summary, in the present embodiment, if the force Fa or Fb, applied from inside the closed door 30, is greater than 4.3kgf or 5.9kgf, the door lever 120 is separated from the door switch 80 even if the door handle 140 is not pushed from the outside, allowing the door 30 to be opened.

This operation may be accomplished as a result of providing the door lever 120 with the bent portion 125 to create the angle X°.

Analyzing this in more detail using the relation (6), opening of the door 30 is accomplished under the assumption that the force Fy applied to the distal end of the holding protrusion 121 is greater than {(M2/L3) - F4*sin(X°)}/cos(X°). If the bent portion 125 is not provided, the angle X° is close to 90°. This means that, in the expression {(M2/L3) - F4*sin(X°)}/cos(X°), the value of cos(X°) of the denominator is almost 0, and the value of sin(X°) of the numerator is almost 1. That is, if the bent portion 125 is not provided, the value of the expression {(M2/L3) - F4*sin(X°)}/cos(X°) is close to infinity. This means that the door 30 may be opened only when the force Fy applied to the distal end of the holding protrusion 21 is infinitely great. If the force Fy is infinitely great, it will be appreciated from relations (1) and (2) that the door 30 may be opened when the force Fa or Fb applied from inside the door 30 is also infinitely great. In conclusion, if the bent portion 125 is not provided, the door 30 is not allowed to be opened even if a person who is locked in the rotating tub 20 applies force to the closed door 30, making it impossible for the person to escape the rotating tub 20.

However, in the present embodiment, as a result of the door lever 120 being formed with the bent portion 125 thus creating the predetermined angle X between the end of the holding protrusion 121, the center point 130a of the door lever shaft 130, and the contact point 128a between the handle contact portion 128 and door handle 140, the door 30 may be opened upon receiving the force Fa or Fb of the above-described magnitude or more applied from inside the door 30, allowing a person locked in the rotating tub 20 to escape through the opened door 30 and consequently, preventing an accident form occurring. Due to the above-described structural change of the door lever 120 according to the embodiment, a safe drum washing machine may be realized, in which the closed door 30 may be opened by force Fa or Fb of a predetermined magnitude or more applied from inside the door 30.

Although the above-described embodiment illustrates the angle X° of 55°, the angle X° may be in a range of 35° to 75°, to allow the door 30 to be opened by force of a predetermined magnitude or more applied from inside the door 30.

Also, although the above-described embodiment illustrates the case where the door 30 is opened by force applied from inside the door 30 in detail, the door 30 may also be opened by smaller force than in the related art even when the user attempts to open the door 30 from the outside by pushing the door handle 140.

This is accomplished based on the principle that the bent portion 125 increases a pivoting angle of the hook portion 122 when the user pushes the door handle 140 to open the door 30. That is, even if the user pushes the door handle 140 with smaller force thus causing the door handle 140 to be pivoted by a smaller angle, the bent portion 125 formed at the door lever 120 increases the pivoting angle of the hook portion 122, allowing the door 30 to be easily opened by smaller force. As is apparent from the above description, in a drum washing machine according to the embodiment of the present invention, even if a door is unexpectedly closed, the door may be opened upon receiving force of a predetermined magnitude or more. This may prevent an accident from occurring when a person is locked in a rotating tub.

Although the embodiment of the present invention has been shown and described, it would be appreciated by those skilled in the art that changes may be made in this embodiment without departing from the principles of the invention, the scope of which is defined in the claims.

## Claims

**1.** A drum washing machine (1) comprising
a body (10) having an opening (11),
a door (30) to open or close the opening (11),
a door switch (80) to lock the door (30), and
a door lock device (100) coupled to the door switch (80), **characterized in that** the door lock device (100) includes a door handle (140) rotatably coupled to the door (30) and a door lever (120) pivotally installed to the door (30) and selectively inserted into or separated from the door switch (80), wherein the body (10) comprises a raised portion and the door lever (120) further includes a hook portion (122) to be selectively caught by or released from the raised portion, a rotating portion (126) rotatably coupled to the door (30) and having a rotation center (130a), and a connecting portion (124) to connect the hook portion (122) and the rotating portion (126) to each other, wherein the door lever (120) includes a bent portion (125) formed at a position thereof such that the connecting portion (124) extends linearly from the hook portion (122) to the bent portion (125), but extends obliquely from the bent portion (125) to the rotating portion (126) to enable release of coupling between the door (30) and the body (10) by a force (Fa, Fb) of a predetermined magnitude or greater applied to the inside of the door (30).

**2.** the drum washing machine according to claim 1, **characterized in that** the door lever (120) further includes a handle contact portion (128) protruding from the rotating portion (126) to contact the door handle (140).

**3.** The drum washing machine according to claim 2, **characterized in that** the hook portion (122) includes a holding protrusion (121) protruding from an end thereof to be caught by the raised portion; and
an angle defined between a contact point (121 a) between the holding protrusion (121) and the raised portion, the rotation center (130a) of the rotating portion (126), and a contact point (128a) between the handle contact portion (128) and the door handle (140) is between about 35° to about 75°.

**4.** The drum washing machine according to claim 1, **characterized in that** the door lever (120) contains at least one of die-cast zinc and die-cast aluminum.

**5.** The drum washing machine according to claim 1, **characterized in that** the door lever (120) is made of a mixture of PolyOxyMethylene (POM) resin and glass fiber.

**6.** The drum washing machine according to claim 7, **characterized in that** a concentration of the glass fiber in the mixture is between about 10% to about 30%.

**Patentansprüche**

1. Trommelwaschmaschine (1), welche aufweist:

   einen Körper (10) mit einer Öffnung (11),
   eine Tür (30) zum Öffnen und Schließen der Öffnung (11),
   einen Türschalter (80) zum Verschließen der Tür (30), und
   eine Türschließeinrichtung (100), die mit dem Türschalter (80) gekoppelt ist, **dadurch gekennzeichnet, dass** der Türschließeinrichtung (100) einen Türhandgriff (140), der drehbar mit der Tür (30) gekoppelt ist, und einen Türhebel (120) umfasst, der verschwenkbar an der Tür (30) angebracht ist und selektiv eingesetzt ist in oder getrennt ist von dem Türschalter (80), wobei der Körper (10) einen angehobenen Abschnitt aufweist und der Türhebel (120) weiterhin einen Hakenabschnitt (122) aufweist, der selektiv aufgenommen oder getrennt ist von dem angehobenen Abschnitt, wobei ein Drehbereich (126) drehbar mit der Tür (30) gekoppelt ist und ein Drehzentrum (130a) aufweist, und einen Verbindungsbereich (124) zum Verbinden des Hakenabschnitts (122) und des Drehbereichs (126) miteinander, wobei der Türhebel (120) einen gekrümmten Abschnitt (125) aufweist, der an einer Position von diesem so gebildet ist, dass der Verbindungsbereich (124) sich linear von dem Hakenabschnitt (122) zu dem gekrümmten Abschnitt (125) erstreckt und sich gleichzeitig schräg von dem gekrümmten Abschnitt (125) zu dem Drehbereich (126) erstreckt, um eine Freigabe der Kopplung zwischen Tür (30) und Körper (10) durch eine Kraft (Fa, Fb) einer vorbestimmten Größe oder größer zu ermöglichen, die auf eine Innenseite der Tür (30) ausgeübt ist.

2. Trommelwaschmaschine nach Anspruch 1, **dadurch gekennzeichnet, dass** der Türhebel (120) weiterhin einen Handgriffkontaktbereich (128) aufweist, der sich von dem Drehbereich (126) zum Kontaktieren des Türhandgriffs (120) erstreckt.

3. Trommelwaschmaschine nach Anspruch 2, **dadurch gekennzeichnet, dass** der Hakenabschnitt (122) einen Haltevorsprung (121) aufweist, der von einem seiner Enden vorsteht zur Aufnahme und vom angehobenen Abschnitt , und ein Winkel definiert ist zwischen einem Kontaktpunkt (121a) zwischen dem Haltevorsprung (121) und dem angehobenen Abschnitt definiert ist, dem Drehzentrum (130a) des Drehbereichs (126) und einem Kontaktpunkt (128a) zwischen dem Handgriffkontaktbereich (128) und dem Handgriff (140),der zwischen 35° und ungefähr 75° beträgt.

4. Trommelwaschmaschine nach Anspruch 1, **dadurch gekennzeichnet, dass** der Türhebel (120) wenigstens eines von druckgegossenem Zink oder druckgegossenem Aluminium enthält.

5. Trommelwaschmaschine nach Anspruch 1, **dadurch gekennzeichnet, dass** der Türhebel (120) aus einer Mischung von Polyoxymethylen (POM) -Kunststoff und Glasfasern gebildet ist.

6. Trommelwaschmaschine nach Anspruch 7, **dadurch gekennzeichnet, dass** eine Konzentration der Glasfasern in der Mischung zwischen 10% bis ungefähr 30% beträgt.


**Revendications**

1. Lave-linge à tambour (1) comprenant :

   une carcasse (10) possédant une ouverture (11),
   une porte (30) permettant d'ouvrir ou fermer l'ouverture (11),
   un contacteur de porte (80) permettant de verrouiller la porte (30), et
   un dispositif de verrouillage de porte (100) couplé au contacteur de porte (80), **caractérisé en ce que :**

   le dispositif de verrouillage de porte (100) inclut une poignée de porte (140) couplée à la porte (30) tout en pouvant tourner et un levier de porte (120) installé sur la porte (30) tout en pouvant pivoter et inséré sélectivement dans le contacteur de porte (80) ou séparé de celui-ci, la carcasse (10) comprenant une partie élevée et le levier de porte (120) incluant en outre un organe formant crochet (122) destiné à être saisi par la partie élevée ou bien libéré de celle-ci, un organe de rotation (126) couplé à la porte (30) tout en pouvant tourner et comportant un centre de rotation (130a), ainsi qu'un organe de raccordement (124) destiné à relier l'organe formant crochet (122) et l'organe de rotation (126) l'un à l'autre, le levier de porte (120) incluant une partie cintrée (125) formée à une position telle de celui-ci que l'organe de raccordement (124) s'étend linéairement depuis l'organe formant crochet (122) jusqu'à la partie cintrée (125) mais s'étend obliquement depuis la partie cintrée (125) jusqu'à l'organe de rotation (126) afin de permettre la libération du couplage entre la porte (30) et la carcasse (10) grâce à une force (Fa, Fb) d'une amplitude prédéterminée ou supérieure appliquée sur l'intérieur de la porte (30).

2. Lave-linge à tambour selon la revendication 1, **caractérisé en ce que :**

le levier de porte (120) inclut en outre un organe de contact de poignée (128) en saillie par rapport à l'organe de rotation (126) pour entrer en contact avec la poignée de porte (140).

3. Lave-linge à tambour selon la revendication 2, **caractérisé en ce que :**

l'organe formant crochet (122) inclut une protubérance de maintien (121) en saillie par rapport à son extrémité afin d'être saisie par la partie élevée, et
l'angle défini entre un point de contact (121a) entre la protubérance de maintien (121) et la partie élevée, le centre de rotation (130a) de l'organe de rotation (126) et le point de contact (128a) entre l'organe de contact de poignée (128) et la poignée de porte (140), se situe d'environ 35 ° à environ 75 °.

4. Lave-linge à tambour selon la revendication 1, **caractérisé en ce que** le levier de porte (120) contient au moins l'un de zinc moulé sous pression et d'aluminium moulé sous pression.

5. Lave-linge à tambour selon la revendication 1, **caractérisé en ce que** le levier de porte (120) est constitué d'un mélange de résine de polyoxyméthylène (POM) et de fibre de verre.

6. Lave-linge à tambour selon la revendication 1, **caractérisé en ce que** la concentration en fibre de verre dans le mélange se situe d'environ 10 % à environ 30 %.

FIG. 1

FIG. 2

FIG. 3

FIG. 4

FIG. 5

## FIG. 6

EP 2 248 938 B1

**EP 2 248 938 B1**

**REFERENCES CITED IN THE DESCRIPTION**

**Patent documents cited in the description**

- EP 1741378 A1
- KR 20090002342 A